(19) Europäisches Patentamt
European Patent Office
Office européen des brevets

(11) **EP 3 637 098 B1**

(12) **EUROPÄISCHE PATENTSCHRIFT**

(45) Veröffentlichungstag und Bekanntmachung des Hinweises auf die Patenterteilung:
**14.07.2021 Patentblatt 2021/28**

(51) Int Cl.:
**G01N 29/032** (2006.01)   **G01F 1/66** (2006.01)
**G01N 15/00** (2006.01)   **G01N 29/44** (2006.01)

(21) Anmeldenummer: **19000357.4**

(22) Anmeldetag: **01.08.2019**

(54) **MESSVERFAHREN UND MESSANORDNUNG ZUR MESSUNG DER PARTIKELGRÖSSENVERTEILUNG UND PARTIKELKONZENTRATION IN EINER LIQUIDDURCHFLOSSENEN LEITUNG**

MEASURING METHOD AND MEASURING ARRANGEMENT FOR MEASURING PARTICLE SIZE DISTRIBUTION AND PARTICLE CONCENTRATION IN A CONDUIT WITH LIQUID FLOWING THROUGH IT

PROCÉDÉ DE MESURE ET DISPOSITIF DE MESURE PERMETTANT DE MESURER LA DISTRIBUTION DE LA TAILLE DES PARTICULES ET LA CONCENTRATION DES PARTICULES DANS UNE CONDUITE TRAVERSÉE PAR UN LIQUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.08.2018 DE 102018006084**

(43) Veröffentlichungstag der Anmeldung:
**15.04.2020 Patentblatt 2020/16**

(73) Patentinhaber: **Nivus GmbH**
**75031 Eppingen (DE)**

(72) Erfinder:
  • **KIBROM, Asmorom**
    **76229 Karlsruhe (DE)**
  • **FRANÇOIS, Pierre**
    **67000 Strasbourg (FR)**

(74) Vertreter: **Mehl-Mikus, Claudia**
**mepat Patentanwälte**
**Dr. Mehl-Mikus, Goy, Dr. Drobnik PartG mbB**
**Eisenlohrstraße 31**
**76135 Karlsruhe (DE)**

(56) Entgegenhaltungen:
WO-A1-2017/215807

• STENER JAN F ET AL: "Monitoring mineral slurry flow using pulse-echo ultrasound", FLOW MEASUREMENT AND INSTRUMENTATION, BUTTERWORTH-HEINEMANN, OXFORD, GB, Bd. 50, 28. Juni 2016 (2016-06-28), Seiten 135-146, XP029711054, ISSN: 0955-5986, DOI: 10.1016/J.FLOWMEASINST.2016.06.022
• SHARMA A ET AL: "ULTRASONIC ATTENUATION SPECTROSCOPY OF INDUSTRIAL SLURRIES", PROCEEDINGS OF THE 1997 IEEE INTERNATIONAL FREQUENCY CONTROL SYMPOSIUM. ORLANDO, FL, MAY 28 - 30, 1997; [IEEE INTERNATIONAL FREQUENCY CONTROL SYMPOSIUM], NEW YORK, NY : IEEE, US, 28. Mai 1997 (1997-05-28), Seiten 196-200, XP000849527, ISBN: 978-0-7803-3729-9

**Beschreibung**

Die Erfindung betrifft ein Messverfahren zur Messung der Partikelgrößenverteilung γ und Partikelkonzentration Cv in einer liquiddurchflossenen Leitung und eine Messanordnung dafür.

Oberflächengewässer sind oft mit Schadstoffen in Form von Feststoffausträgen belastet, die aus Siedlungen über Regen- und Mischwassereinleitungen in die Gewässer gelangen. Die Feststoffausträge, auch als Fracht bezeichnet, können problematisch für die Umwelt sein, wenn sie Gewässerorganismen schädigen, wie etwa Kiemen von Fischen. Auch die vermehrte Verschlammung der Gewässersohle ist nachteilig.

Bisher gibt es keine verlässliche Messmethode, um eine genaue Frachtermittlung in Gewässern und Kanalnetzen durchzuführen; es sind lediglich modellgestützte Schätzungen möglich. Hierbei bildet die Durchflussmessung einen Schlüsselparameter im Regelwerksmanagement des Kanalnetzes oder der Kläranlage. Ein Großteil der modernen Durchflussmesstechnik basiert auf Ultraschall, wie es bspw. in US 9 726 590 B2 offenbart ist.

Weitere Parameter sind die Partikelgrößenverteilung γ und Partikelkonzentration Cv. Nach derzeitigem Stand versucht man beide Parameter im Wesentlichen mittels direkter Probenentnahme (US 9 086 350 B2), optischer Messtechnik oder Ultraschallmesstechnik zu erfassen. Gerade die optische Messtechnik, wie sie auch in der EP 1 642 113 B1 beschrieben ist, hat den Nachteil, dass der Wartungsaufwand sehr hoch ist: Die Sensoren müssen insbesondere bei der Verwendung in Abwasser in kurzen Intervallen gereinigt werden, weil sonst nur wenig Licht detektiert wird. Die Publikation STENER JAN F ET AL: "Monitoring mineral slurry flow using pulse-echo ultrasound", FLOW MEASUREMENT AND INSTRUMENTATION, BUTTERWORTH-HEINEMANN, OXFORD, GB, Bd. 50, 28. Juni 2016, Seiten 135-146, offenbart ein Messverfahren zur Messung der Partikelgrößenverteilung und Partikelkonzentration in einer liquiddurchflossenen Leitung mittels einer Ultraschall-Durchflussmessanordnung.

Ausgehend von diesem Stand der Technik ist es Aufgabe der vorliegenden Erfindung, ein Messverfahren zum Feststellen von Feststoffeinträgen vorzuschlagen, mit dem mittels Ultraschallmesstechnik mit hoher Genauigkeit eine Fracht ermittelt werden kann, d. h., wie Parameter wie die Größenverteilung und Konzentration der Partikel, die die Fracht bilden, gemessen werden können.

Diese Aufgabe wird durch ein Messverfahren zur Messung der Partikelgrößenverteilung und Partikelkonzentration in einer liquiddurchflossenen Leitung mit den Merkmalen des Anspruchs 1 gelöst.

Die weitere Aufgabe, eine Durchflusamessanordnung bereitzustellen, die eine genaue Ermittlung der Fracht ermöglicht und dabei kompakt aufgebaut ist, wird durch die Anordnung mit den Merkmalen des unabhängigen Anspruchs 8 gelöst.

Weiterbildungen des Messverfahrens und der Messanordnung sind In den Unteransprüchen ausgeführt.

Nach einer ersten Ausführungsform des erfindungsgemäßen Messverfahrens zur Messung der Partikelgrößenverteilung γ und Partikelkonzentration Cv in einer liquiddurchflossenen Leitung mittels einer Durchflussmessanordnung weist diese apparative Anordnung zumindest einen Ultraschall-Sensor auf, der mit einer Datenverarbeitungseinheit und einer Speichereinheit operativ gekoppelt ist.

Die liquiddurchflossene Leitung im Sinne der Erfindung Ist jede geschlossene oder offene Rohrleitung und jeder Kanal, die bzw. der teil- oder vollgefüllt ist.

Das Messverfahren umfasst die folgenden Schritte:

- Anordnen der Durchflussmessanordnung an einer vorbestimmten Stelle an der liquiddurchflossenen Leitung, dabei Anordnen des Ultraschall-Sensors an der Leitung;
- mittels Ultraschall-Sensor der Durchflussmessanordnung Abgeben eines UltraschallPulsstoßes zu einem vorbestimmten ersten Zeitpunkt to mit einer vorbestimmten Frequenz $f_I$, wobei der Pulsstoß zumindest 10 Perioden umfasst;
- mit dem Ultraschall-Sensor der Durchflussmessanordnung Erfassen eines Spannungssignals V zu dem ersten Zeitpunkt to, wobei die Spannung V mit einer Partikelgrößenverteilung γ und einer Partikelkonzentration Cv des Fluids in der Leitung an der vorbestimmten Stelle zum Zeitpunkt to korreliert;
- Bestimmen einer Intensität durch Quadrieren des Spannungssignals V;
- mit der Datenverarbeitungseinheit Zwischenspeichern der bestimmten Intensitäts- und Zeitdaten in der Speichereinheit,
- Wiederholen des Erfassens des Spannungssignals V zu unterschiedlichen Zeitpunkten $t_N$, die auf den ersten Zeitpunkt to folgen, dabei Berechnen der Intensitätsdaten und Zwischenspeichern der Intensitäts- und Zeitdaten in der Speichereinheit;
- nach einer vorbestimmten Anzahl Messungen in der Datenverarbeitungseinheit

-- aus den Im Zwischenspeicher gespeicherten Intensitätsdaten Bestimmen eines Intensitätsmittelwerts I und Varianz σ aus dem zeitlichen Gesamtverlauf der Intensitätsdaten
-- aus dem Intensitätsmittelwert I Bestimmen eines (korrigierten/normierten) Intensitätsprofils $I_N$

-- aus dem Intensitätsmittelwert I und der Varianz $\sigma$ Bestimmen eines Intensitätsmoments $\tau$ und einer Intensitätsmomentsverteilung $\tau_N$ ($\tau_N$ ist die normierte/korrigierte Version von $\tau$, und $I_N$ ist die normierte/korrigierte Version von I) sowie aus dem Intensitätsprofil $I_N$ Bestimmen eines Dämpfungsparameters $\alpha$, eines Rückstreuparameters $\beta$ sowie eines Verhältnisses R aus Intensitätsmomentsverteilung $\tau_N$ und Intensitätsprofil $I_N$, und

- aus dem Verhältnis R, dem Dämpfungsparameter $\alpha$ und dem Rückstreuparameter $\beta$ Bestimmen der Partikelgrößenverteilung $\gamma$ und einer Partikelkonzentration Cv des Fluids mittels eines Optimierungsverfahrens.

Aus der Partikelkonzentration $C_V$ in g/l Fluid und der Durchflussmenge Q in l/s kann durch einfache Multiplikation die sogenannte "Fracht' ermittelt werden, wobei nach einer Ausführungsform des Messverfahrens die Durchflussmenge sequentiell zur Partikelkonzentrationsmessung anhand der Fließgeschwindigkeitsmessung ermittelt wird.

Nach einer weiteren Ausführungsform des Messverfahrens ist eine Anschaltphase vorgesehen, wobei eine vorbestimmte Menge an Daten innerhalb eines vorgegebenen Zeitraums und über alle zu verwendenden Frequenzen erfasst wird. Die vorbestimmte Menge an Daten entspricht der Größe des verwendeten Speichers, der ein Ringspeicher sein kann. Der Ringspeicher stellt für alle verwendeten Frequenzen Ringpuffer bereit. Die Anschaltphase Ist dann beendet, wenn der Ringpuffer ausreichend befüllt ist: Dazu wird eine Berechnung der zu bestimmenden Parameter erst dann gestartet, wenn der Ringpuffer für alle Frequenzen befüllt ist. Damit kann dann eine gleitende Mittelung über die Gesamt-Messzeit erreicht werden.

Ferner kann das Messverfahren zum Erfassen der Spannung V vorsehen, dass mittels des Ultraschallsensors ein Ultraschallpulsstoß abgegeben wird. Dazu weist der Ultraschallsensor einen oder mehrere Ultraschall-Schallwandler auf. Ein erster dieser Schallwandler gibt einen Ultraschallpulsstoß mit einer vorbestimmen Periodenanzahl in einem Bereich von 10 bis 50 Perioden, bevorzugt von 30 bis 40 Perioden einer vorbestimmten Frequenz $f_j$ zu dem ersten Zeitpunkt to ab. Mittels des gleichen (also des ersten) oder eines zweiten Schallwandlers des Ultraschall-Sensors wird der rückgestreute Ultraschallpulsstoß, also der von Partikeln im Fluid rückgestreut wird, erfasst.

Das Messverfahren kann in einer Weiterbildung vorsehen, dass eine vorbestimmte Anzahl Arbeitsfrequenzen in einem Bereich von 1 bis 15, bevorzugt 7 Frequenzen, verwendet wird, wobei die Arbeitsfrequenz in einem Bereich von 200 kHz bis 10 MHz, bevorzugt von 1 bis 8 MHz liegt. Die gemessene Spannung V wird dann zu der oben beschriebenen Berechnungsvariante verwendet. Beispielhaft ist es möglich, für die Partikelmessung mit drei Schallwandlern mindestens 7 Frequenzen von 1 bis 8 MHz einzusetzen, wobei für die Geschwindigkeitsbestimmung eine Spannungs-Messung mit Kreuzkorrelation bei 1 MHz mit einem von drei Schallwandlern realisiert werden kann.

Bevorzugt kann in einer Weiterbildung der empfangene Ultraschallpulsstoß als analoges Signal von dem Ultraschall-Schallwandler erfasst und das Signal in einer Signalprozessoreinheit mittels eines Tiefpassfilters gefiltert und digitalisiert werden. Es können ferner andere elektronische Filter verwendet werden. In einer Weiterbildung kann ein AD/DA-Wandler genutzt werden.

Im Einzelnen können die Parameter Partikelgrößenverteilung $\gamma$ und Partikelgrößenkonzentration Cv nachfolgender Berechnung bestimmt werden:

Die gesamte Fracht einer liquiddurchflossenen Leitung entspricht der Partikelkonzentration in Gramm pro Liter mal die Durchflussmenge Q in Liter pro Sekunde, um daraus Masse in Gramm pro Sekunde zu erhalten. Im Wesentlichen müssen daher die Durchflussmenge und die Partikelkonzentration bestimmt werden.

Das Messverfahren kann dazu vorsehen, dass die Fließgeschwindigkeit mittels Kreuzkorrelation zweier zeitlich aufeinanderfolgender erfasster Spannungssignale V erfasst wird.

Ferner kann die Spannung V für die Partikelmessung mittels Durchfahren verschiedener Frequenzen erfasst werden, wobei von einer niedrigsten zu einer höchsten Frequenz schrittweise gemessen wird. Diese sequentielle Messung kann dann von einer Durchflussmessung (Kreuzkorrelation) gefolgt werden, wonach die nächste sequentielle Messung beginnt.

Im Weiteren kann zum Bestimmen der Intensität I, die mit einer Partikelkonzentration korreliert, die Signalamplitude im Quadrat von zeitgleich erfassten Signalen bestimmt werden. Es wird dabei die Einhüllende verwendet, was der Spannungsamplitude an jedem Zeitpunkt entspricht. Das Quadrat dieser Einhüllenden ist die Intensität. Die gesamte Kurve kann als Intensitätsprofil bezeichnet und normiert werden (Entfernen der physikalischen Effekte).

Die vorgenannten Schritte können für die folgende Bestimmung verwendet werden, wobei das Messverfahren vorsehen kann, dass die Parameter Mittelwert I, Intensitätsprofil $I_N$ und Varianz $\sigma$ gleitend berechnet werden. Dabei kann bei erneuter Erfassung des Spannungssignals V der neue Datensatz an einem Anfangsplatz gespeichert werden und an einem Endplatz in der Speichereinheit wird ein gespeicherter, älterer Datensatz gelöscht. Dieses First-in-First-Out Prinzip über die Verwendung eines Ringpuffers ermöglicht die gleitende Berechnung der einzelnen Parameter.

Berechnung von Durchflussmenge/Fließgeschwindigkeit:

Folgende Gleichung gilt als Basis für die Berechnung der Durchflussmenge:

$$Q = V_{mittel} \times A(h) \quad (1)$$

Q ist hierbei die Durchflussmenge, A(h) die durchflossene Querschnittsfläche, die sich aus dem Füllstand und der Geometrie der Messstelle ergibt, $V_{mittel}$ die mittlere Fließgeschwindigkeit, die mit Hilfe des integrierten Durchflusssensors ermittelt wird. Dieser Geschwindigkeitssensor funktioniert nach dem Prinzip der Ultraschallkreuzkorrelationstechnik. Dabei werden innerhalb einer kurzen Zeitspanne mehrere Pulse in das Medium abgestrahlt und die von einer Partikelwolke im Medium zurückgestreuten Signale aufgezeichnet. "Medium" bezeichnet dabei die Flüssigkeit oder das Gas, deren/dessen Eigenschaften mit dem Durchflusssensor untersucht werden. Da die Partikelwolke mit der lokalen Fließgeschwindigkeit v in Bewegung ist, ergibt sich ein von v abhängiger zeitlicher Versatz zwischen den aufgezeichneten Signalen, daraus kann v ortsabhängig bestimmt werden, wie es in DE 19740549 A1 und WO 2010057480 A2 beschrieben ist.

Berechnung der Partikelkonzentration:

In das Medium abgestrahlte Ultraschallwellen werden von im Medium vorhandenen Partikeln verschiedener Konsistenz (hart mineralisch, weich organisch etc.) und Größe gestreut. Dabei ist die Energie der gestreuten Welle abhängig vom Verhältnis Partikelgröße zu Frequenz der Schallwelle, sowie der Partikelform und -art. Nutzt man sowohl zur Schallgenerierung als auch Schalldetektion piezoelektrische Schallwandler, so lassen sich Ultraschallwellen als am Schallwandler detektierte elektrische Spannung V messen, somit ist die Energie einer auf den Schallwandler auftreffenden Schallwelle proportional zu $V^2$.

Aufgrund des Wellengesetzes ist ein zum Zeitpunkt $t_i$ nach dem Senden erfasster Amplitudenwert gleichzeitig auch eine Ortsinformation für die Amplitude $V_i$ am Ort $r_i$ relativ zur Schallwandlerposition:

$$r_i = c_w \, t_i / 2$$

Dabei ist $c_w$ die Schallgeschwindigkeit im Medium und $t_i$ ist die Laufzeit der Welle zum Ort $r_i$ (Hin- und Rückweg).

Folglich liefert ein Zeitsignal von der am Schallwandler gemessenen Spannung auch $V^2(r)$. Wenn nun Schallwellen verschiedener Frequenzen in das Medium abgestrahlt werden und für jede dieser Frequenzen $V^2(r)$ gemessen wird, so lässt sich mit dieser Information eine Feststoffkonzentration ermitteln. Folgende Gleichung verdeutlicht dieses Verhältnis von Partikeleigenschaften zu $V^2(r)$:

$$V^2(r) = S^2 \frac{1}{r^2} \beta e^{-4\alpha r} \quad (3)$$

S ist eine Systemfunktion, die von den Einstellungen der Treiberelektronik und der Schallwandlercharakteristik abhängt. Letztere wird mittels Kalibriermessungen ermittelt. r ist die Distanz zum Schallwandler in Metern und $\beta$ der Rückstreukoeffizient in 1/m und bezeichnet das Verhältnis von eingestrahlter zu rückgestreuter Intensität. $\alpha$ ist die Dämpfungskonstante, dabei enthält $\alpha = \alpha_p + \alpha_w$ die Dämpfung durch Partikelstreuung $\alpha_p$ und Wasser $\alpha_w$. Die Wasserdämpfung für Ultraschallwellen ist bereits gut untersucht. Die Systemfunktion S ist eine bekannte Größe, folglich lassen sich S, $1/r^2$ und $\alpha_w$ aus der Gleichung herausnormieren. Die so erhaltene Gleichung sieht dann wie folgt aus:

$$V_n^2(r) = \beta e^{-4\alpha_p r} \quad (4)$$

$V_n$ bezeichnet hierbei die normierte Spannungsamplitude. Auf der rechten Seite von Gleichung (4) stehen nur noch solche Größen, die direkt von der Partikelkonzentration im Medium abhängen:

$$\beta = C_v \sum_{i=1}^{n} K_{bi} \frac{f_i^2}{a_i} \gamma_i \quad (5)$$

$$\ddot{\alpha}_p = \dot{C}_v \sum_{i=1}^{n} K_{ai} \frac{3\chi_i}{4a_i} \gamma_i \qquad . (6)$$

$C_v$ entspricht der volumetrischen Konzentration, f ist ein Formfaktor für akustische Streuung an sphärischen, harten Partikeln; a ist der Radius der Partikelklasse i und $\gamma$ die Volumenfraktion (Anteil) der Partikelklasse i. Dabei ist die Summe $\Sigma \gamma = 1$ und $K_{bi}$ ist die Korrektur für die Rückstreuung. Partikel sind nie perfekt sphärisch oder akustisch "hart", daher wird ein Korrekturfaktor für Rückstreukoeffizient und Dämpfung benötigt. Dieser wird für eine bestimmte Partikelklasse i über Kalibriermessungen bestimmt. $\chi_I$ entspricht dem Gesamtwirkungsquerschnitt der Streuung für sphärische, "harte" Partikel und $K_{ai}$ ist der Korrekturfaktor für die Dämpfung - es gilt das Gleiche wie für $K_{bI}$.

Die Summierung jeweils in Gleichungen (5) und (6) erfolgt über alle im Medium vorhandenen Partikelarten. $V_n^2(r)$ wird im Folgenden als Intensitätsprofil bezeichnet und der Einfachheit halber ohne Index n geschrieben.

Letztendlich ließen sich $\beta$ und $\alpha$ durch eine Kurvenanpassung von Gleichung (4) an die gemessenen Intensitätsprofile bestimmen - somit auch die Partikelgrößenverteilung und Partikelkonzentration. Im realistischen Fall vieler physikalisch unterschiedlicher Partikelarten, die auch noch eine breite Partikelgrößenverteilung aufweisen, kann die Anzahl unbekannter Parameter schnell sehr groß werden.

Daher ist es notwendig, zusätzliche Informationen zu nutzen, um die Zahl der unbekannten Größen zu reduzieren. Diese Überlegung führte zur Einführung der erfindungsgemäßen Messgröße $\tau$. Diese Messgröße $\tau$ ist ebenfalls proportional zur Konzentration, daher ist das Verhältnis von Intensitätsprofil zu $\tau$-Profil unabhängig von der Konzentration. Somit lässt sich mit Hilfe dieser Größe zunächst der mittlere Durchmesser der Partikel schätzen. Anschließend nutzt man diese Information, um Konzentration und Partikelgrößenverteilung zu bestimmen.

Das "Intensitätsprofil" ergibt sich wie folgt: Aus einfachen Betrachtungen zum Zusammenhang zwischen Schalldruck und Schallintensität I(r) ergibt sich:

$$I(r) = C * V^2 \ (7)$$

Die Konstante C ist Teil der oben definierten Systemfunktion S. Aufgrund der Dynamik strömender Medien mit Feststoffanteilen sind obige Gleichungen immer auf Mittelwerte bezogen. Daher zur Verdeutlichung nochmals eine andere Schreibweise von Gleichung (3) (<> bezeichnet Mittelwerte):

$$\langle I \rangle(r) = C * \langle V^2 \rangle(r) = S^2 \frac{1}{r^2} \beta e^{-4\alpha r} \ (8)$$

Die Konstante C ist in die Systemfunktion S eingegangen. $<V_2>$ bzw. $<I>$ wird nun im Folgenden als Intensitätsprofil bezeichnet und einfach wieder durch I abgekürzt. Ein Intensitätsprofil I(r) erhält man somit durch Mittelung der am Schallwandler gemessenen Amplitudenquadrate. Da ein Intensitätsprofil für verschiedene Frequenzen ermittelt wird, gilt $<I>_j$ mit j als Frequenzindex. Auch der Frequenzindex wird zunächst noch weggelassen. Das normierte Intensitätsprofil ist somit identisch zu Gleichung 4. Streng genommen ist I(r) aufgrund des Dämpfungsterms nicht linear bezüglich der Partikelkonzentration. Bei an sich kleinen Partikelkonzentrationen und/oder niedrigen Frequenzen (kleiner als 6 MHz) kann man den Dämpfungsterm in Gleichung (4) jedoch vernachlässigen und somit wird I(r) näherungsweise linear in Bezug auf die Partikelkonzentration.

Oben wurde der Begriff des Intensitätsprofils definiert. Nun soll dieser Messwert durch die neue Messgröße, des Partikelkonzentrationsparameters $\tau$ erweitert werden.

Das Messverfahren kann zur weiteren Berechnung vorsehen, dass zur Bestimmung des Partikelkonzentrationsparameters $\tau$ eine lineare Korrelation zwischen der Varianz $\sigma$ und dem Quadrat des Intensitätsmittelwerts I gebildet wird, wobei der Partikelkonzentrationsparameter $\tau$ linear in Bezug auf die Partikelkonzentration ist. Es wird hierbei zwischen zwei Domänen - einfache und mehrfache Streuung - hinsichtlich der rückgestreuten Intensität unterschieden. Einfache Streuung liegt vor, wenn eine niedrige Partikelkonzentration in dem Fluid vorliegt, oder die freie Weglänge bzw. der mittlere Abstand der Partikel zueinander im Verhältnis zur Wellenlänge groß ist. In solch einer Domäne können die einzelnen Partikel näherungsweise als einzelne Streuquellen ohne Wechselwirkung betrachtet werden. Mehrfachstreuung bedeutet hohe Konzentration oder die freie Weglänge bzw. der mittlere Abstand der Partikel zueinander ist kleiner oder gleich der Wellenlänge. Die gestreute Welle trifft also im Durchschnitt auf mehr als einen Partikel bevor sie detektiert wird. Die Intensität ist jetzt nicht mehr linear mit der Anzahl N an Partikeln im Volumen und das hierin erfindungsgemäß aufgeführte Verfahren kann nicht mehr direkt angewendet werden, eine direkte Proportionalität von I zu N kann nicht mehr angenommen werden. Literaturreferenzen zeigen, dass dies z. B. bei Sandpartikeln ab 10-20 g/l eine Rolle spielen würde.

Zur Berechnung wird ferner die Varianz $\sigma$ der gemessenen Daten benötigt.

Es gilt folgende Beziehung zwischen I und $\sigma$

$$\sigma^2 = <I^2> - <I>^2 \quad (9)$$

(Die Klammern beschreiben wieder Erwartungs- bzw. Mittelwerte. Sie tauchen hier nur kurz wieder auf um Mittelwertquadrate und Mittelwert der Quadrate zu unterscheiden). Befinden sich zwei verschiedene Partikel im Medium mit den zwei Rückstreuintensitäten $I_1$ und $I_2$, so wird daraus

$$\sigma^2 = \sigma_1^2 + \sigma_2^2 + 2^*I_1^2 I_2^2. \quad (10)$$

Aus (10) lässt sich zeigen

$$\tau = \sigma^2 - I^2 = \sigma_1^2 - I_1^2 - \sigma_2^2 - I_2^2 = \tau_1 + \tau_2 \quad (11)$$

Die $\tau$ - Werte mehrerer Partikel addieren sich auf und somit ist der Parameter $\tau$ linear bezüglich der Partikelkonzentration. Bei sehr großen Konzentrationen, bei denen der Dämpfungsterm groß wird, ist diese Annahme nicht mehr gültig. Dies gilt wie bereits oben erwähnt auch für I. Eine Frachtmessung ist in diesem Fall auch aufgrund der dann verstärkt auftretenden Mehrfachstreuungen eingeschränkt möglich.

Es lässt sich zeigen, dass

$$\tau = \frac{45.7\, I^2}{N} \quad (12)$$

Und mit Hilfe der Gleichung (3)

$$\tau = S^4 \cdot \frac{1}{r^6} \gamma e^{-8\alpha r} \quad (13)$$

$\gamma$: neuer Rückstreukoeffizient mit den bereits in (5)-(6) definierten Größen

$$\gamma = C_v \sum_{i=1}^{n} K_i^2 \gamma_i f^4 a_i \quad (14)$$

Auch hier gilt, dass bekannte Werte wie in Gleichung (4) durch Normierung entfernt werden. Es ergeben sich zwei Parameter $I_n$ und $T_n$. Da beide innerhalb der hier geltenden Näherung linear bezüglich der Partikelkonzentration $C_v$ sind ergibt sich aus deren Verhältnis das Verhältnis R:

$$R = \frac{\tau_n}{I_n} = e^{-2(C_v \alpha_p)r} \frac{\sum_{i=1}^{n} K_i^2 \gamma_i f^4 a_i}{\sum_{i=1}^{n} K_i \gamma_i \frac{f^2}{a}} \quad (15)$$

Bis auf den exponentiellen Dämpfungsterm sind hier alle Größen unabhängig von der Partikelkonzentration Cv. Die Dämpfungskonstante ist bei Frequenzen kleiner als 5 bis 6 MHz auch bei moderaten Konzentrationen klein. Daher lässt sich dort in der Regel unabhängig von der Konzentration die Größenverteilung der Partikel zumindest schätzen, im Fall einer sehr schmalen Größenverteilung sogar genau bestimmen. Bei höheren Frequenzen kann die Dämpfungskonstante $\alpha_p$ zunächst durch $I_n$ bestimmt werden, bevor das Verhältnis R in Gleichung (15) ausgewertet wird.

Nach einem Messprozess erhält man somit folgende Messgrößen (der Frequenzindex j ist noch ergänzend hinzugefügt):

$$R_j = e^{-2(C_v \alpha_p)r} \frac{\sum_{i=1}^{n} K_{bi}^2 \gamma_i f_{ij}^2 a_i}{\sum_{i=1}^{n} K_{bi} \gamma_i \frac{f_{ij}^2}{a_i}} \qquad (16)$$

$$\beta_j = C_v \sum_{i=1}^{n} K_{bi} \frac{f_{ij}^2}{a_i} \gamma_i \qquad (17)$$

$$\alpha_{jp} = C_v \sum_{i=1}^{n} K_{ai} \frac{3\chi_{ij}}{4a_i} \gamma_i \qquad (18).$$

Durch die Definition eines plausiblen Partikelradiusbereichs $a_i$ mit i = 1 bis n und sowie der Arbeitsfrequenzen j = 1 bis m kann das Gleichungssystems (16) bis (18) gelöst werden. So erhält man alle noch unbekannten Größen: D. h. die Partikelgrößenverteilung $\gamma$ und die Partikelkonzentration Cv. Dies erfolgt bspw. mit Hilfe eines bekannten Optimierungsverfahrens, wie z. B. einem Hybrid aus Broyden-Fletcher-Goldfarb-Shanno (BFGS) Verfahren und Simulated Annealing. Da mathematisch unter Umständen lokale Lösungen (Minima) existieren können, die physikalisch nicht plausibel sind, wird mittels Simulated Annealing (ein an den Bergsteigeralgorithmus angelehntes Verfahren) zunächst die Lösung in eine physikalisch plausible Richtung geleitet. Dann wird mittels BFGS die exakte Lösung berechnet. Es können auch weitere Optimierungsverfahren verwendet werden, die eine hohe Genauigkeit der berechneten Ergebnisse liefern.

Das BFGS Verfahren wird wie folgt verwendet: Ausgangslage ist das in Gleichungen (16) bis (18) beschriebene Gleichungssystem zur Bestimmung der Partikelgrößenverteilung und -konzentration. Zuerst wird die Größenverteilung bestimmt, wobei die Grundlage für die Optimierungsberechnung der Residuenvektor $res_j$

$$res_j = \left(R_j - R_j^m\right) + \left(\frac{\beta_j}{\beta_N} - \frac{\beta_j^m}{\beta_N^m}\right) \qquad (19)$$

und der Parametervektor P

$$\vec{P} = (a_1, a_2, \cdots, \gamma_1, \gamma_2, \cdots, K_{b1}, K_{b2}, \cdots) \qquad (20)$$

ist.

Dabei ist $\beta_j^m$ der gemessene Rückstreukoeffizient mit den Frequenzen j, wobei m die Anzahl der gemessenen Größen angibt.-$a_i$ bezeichnet die Radiusklassen der im Medium enthaltenen Partikel und $\gamma_i$ deren volumetrischen Anteil als Faktor. N bestimmt die höchste Arbeitsfrequenz, wobei j die Zahl der Arbeitsfrequenzen aufsteigend mit j = 1 bis N benennt. Entsprechend ist $\beta_N^m$ der gemessene Rückstreukoeffizient dieser höchsten Arbeitsfrequenz. In Gleichung (19) ist gezeigt, dass die Rückstreukoeffizienten im Residuenvektor gegen den Wert bei der höchsten Frequenz normiert werden. Auf diese Weise erhält man in diesem Vektor Größen, die nur von der Partikelgrößenverteilung abhängig sind.

Die Größe, die mit Hilfe des Optimierungsverfahrens durch Suche eines globalen Minimums minimiert werden soll, ergibt sich aus dem Betragsquadrat des Residuenvektors $res_j$, dass die Funktion der kleinsten Fehlerquadrate S die zu minimierende Funktion ist:

$$S = \sum_{j=0}^{N} res_j^2 \quad (21)$$

Zuerst werden alle Elemente im Parametervektor P auf die kleinstmöglichen Werte gesetzt. Das nächste Element im Parametervektor wird dann um einen vorbestimmten Schritt in eine positive Richtung geändert. Ferner werden das Verhältnis $R_j$ und die Größe $\beta_j$ mit Hilfe der Gleichungen (16) und (18) bestimmt. Dann wird die Funktion S berechnet und geprüft, ob diese Funktion verringert wurde. Wenn sie sich nicht verringert oder gleich bleibt, werden die Änderungen verworfen und es wird zurückgegangen zum zweiten Schritt, in dem ein Element in dem Parametervektor geändert wird.

So wird jedes Element im Parametervektor P iteriert, bis keine Reduzierung von S mehr möglich ist.

Auf diese Weise kann sich dem globalen Minimum (eigentlich ein "lokales" Minimum in einem physikalisch sinnvollen Wertebereich) zügig genähert werden und es können dann weitere Verfahren zur Minimumsuche angewendet werden, insbesondere das Newton'sche oder Quasi-Newton'sche Verfahren. Beispiele dafür sind Gauss-Newtonoder Gradient Descent, Davidon-Fletcher-Powell-Verfahren.

Mittels des Broyden-Fletcher-Goldfarb-Shanno (BFGS)-Verfahrens kann der Parametervektor P erhalten werden, an der Stelle, an der S minimal wird. Das Ergebnis dieses ersten Schrittes entspricht der Partikelgrößenverteilung und wird dargestellt durch die Parameter $a_l$ und $\gamma_l$. Die $K_{bi}$ können zur Abschätzung der Materialart herangezogen werden: Je kleiner K, desto eher handelt es sich um weiche Partikel wie z. B. organische Materialien. Die Interpretation der K-Werte setzt eine vorhandene Datenbasis über eine Vielzahl an Applikationen voraus. So kann mit Hilfe einer durch viele Experimente erstellten Datenbank von $K_{bl}$ Werten auch die Größe des Parametervektors P reduziert werden.

Die Größenverteilung ist nun bekannt; dann wird ein weiterer Residuenvektor $res_j^\alpha$ erstellt

$$res_j^\alpha = \left( a_j - a_j^m \right) + \left( \beta_j - \beta_j^m \right) \quad (22)$$

und entsprechend ein neuer Parametervektor $P^\alpha$

$$\overrightarrow{P^\alpha} = \left( C_v, K_{a1}, K_{a2}, \cdots \right) \quad (23),$$

der jetzt nur noch aus der volumetrischen Konzentration $C_v$ und den $K_{ai}$ Faktoren für die Dämpfung besteht. Die zu minimierende Funktion S wird aus den $res_{\alpha j}$ wie bereits in Gleichung (21) gebildet.

Das Optimierungsverfahren wird mittels Variation des neuen Parametervektors wie oben beschrieben durchgeführt und die Ergebnisse sind nun die Konzentration und die Korrekturfaktoren für die Dämpfung $K_{ai}$. Für letztere gilt das bereits zuvor erläuterte: Die Korrekturfaktoren $K_a$ und $K_b$ werden im operativen Fall aus einer Datenbank genommen, so dass sich $P^\alpha$ nur auf $C_v$ reduziert. Wenn die Art der Partikel völlig unbekannt ist, muss auch nach den $K_a$ und $K_b$ aufgelöst werden. Es kann durch Probenentnahme an vorbestimmten Messstellen und weiterer Laboranalyse die K-Faktoren erhalten werden und eine Datenbank aufgebaut werden, so dass die Parametervektoren $P^\alpha$ und P möglichst wenige bzw. wenig freie Elemente enthalten.

Das Messverfahren kann ferner vorsehen, dass die berechneten Parameter, wie die bestimmte Partikelgrößenverteilung $\gamma$ und der Partikelkonzentration Cv an eine Ausgabeeinheit ausgegeben werden. Es können ferner weitere Parameter, die in der Bestimmung der Schlussparameter in Zwischenschritten verwendet werden, ausgegeben und zur weiteren Datenverarbeitung genutzt werden.

Eine Durchflussmessanordnung, die zur Durchführung des erfindungsgemäßen Messverfahrens ausgebildet ist, weist zumindest einen Ultraschall-Messsensor, eine Datenverarbeitungseinheit und eine Speichereinheit auf.

In einer Weiterbildung der Durchflussmessanordnung kann vorgesehen sein, dass die Speichereinheit ein Ringpuffer oder eine FIFO-Liste ist, wobei für eine vorbestimmte Anzahl Frequenzen die gleiche Anzahl Puffer vorliegt. Eine gepufferte Speicherung bietet der gleitenden Bestimmung der einzelnen Parameter eine schnell zugängliche Speichermöglichkeit.

Ferner kann die Messanordnung vorsehen, dass der Ultraschall-Sensor zwei oder mehr Ultraschall-Schallwandler aufweist. Die Schallwandler sind zusammen mit einer entsprechenden Signalelektronik in einem Gehäuse angeordnet und bilden einen Sensor. Pro Messanordnung ist in der Regel ein Sensor vorgesehen.

In einer platzsparenden Messanordnung kann vorgesehen sein, dass der UltraschallSensor eine Vielzahl an Ultraschall-Schallwandlern aufweist, die in einem Array angeordnet sind.

Der Messablauf mit der erfindungsgemäßen Durchfluss-Messanordnung kann beispielhaft wie folgt ablaufen: Ein Ultraschallpulsstoß (Sinus oder Rechteck) mit mehr als 10 Perioden einer Frequenz fj wird in das Medium abgegeben zum Zeitpunkt $t_0 = 0$. Die Aufzeichnung der Spannung an den piezoelektrischen Schallwandler beginnt zeitgleich bei to = 0, womit alle Daten der späteren Berechnung zur Verfügung stehen. Das aus der Rückstreuung erhaltene Analogsignal wird mit einem entsprechenden Tiefpass gefiltert und digitalisiert. Aus diesen Daten werden die Hüllkurve bzw. das Quadrat der Spannung in der Datenverarbeitungseinheit berechnet und ggf. normiert. Das Ergebnis wird in einem Ringpuffer oder FIFO-Speicher zwischengespeichert. Für eine Anzahl M an Arbeitsfrequenzen existieren somit die gleiche Anzahl M Puffer.

In der Anschaltphase muss die Messanordnung zunächst ausreichend Daten für die statistische Berechnung akquirieren. Sind ausreichend Daten gespeichert, d. h. der Speicher voll, werden daraus Mittelwert I, Intensitätsprofil $I_n$ und Varianz $\sigma$ bestimmt. Danach kann die Messanordnung bei jedem Durchlauf neue Ergebnisse berechnen, da für jede neue Aufzeichnung der älteste Eintrag aus dem Ringpuffer gelöscht wird. Im Endeffekt wird eine gleitende Mittelung über ein Fenster von N Messwiederholungen realisiert.

Aus der Intensität I und der Varianz $\sigma$ lassen sich jetzt wie zuvor beschrieben (s. Gleichung (11)) $\tau$ und somit $\tau_n$ bestimmen. Aus $I_n$ wiederum $\alpha_p$ und $\beta$. Aus $\tau_n / I_n$ erhält man das Ratio R. Mit $\alpha$ und $\beta$ bilden diese zusammen das Gleichungssystem, das dann Partikelgrößenverteilung $\gamma$ und -konzentration Cv errechnen lässt.

Weitere Ausführungsformen der Messanordnung und des Messverfahrens sowie einige der Vorteile, die mit diesen und weiteren Ausführungsformen verbunden sind, werden durch die nachfolgende ausführliche Beschreibung unter Bezug auf die begleitende Figur deutlich und besser verständlich. Die einzige Figur ist lediglich eine schematische Darstellung einer Ausführungsform der Erfindung.

Dabei zeigt die

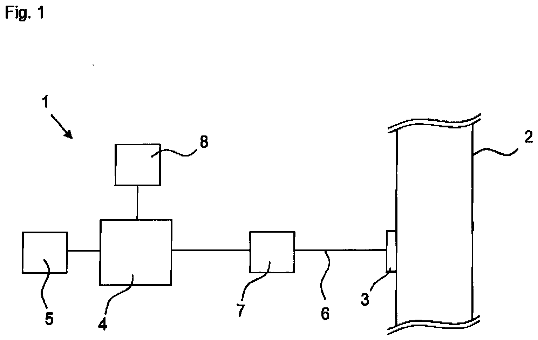

**Fig. 1** eine schematische Ansicht der Durchflussmessanordnung.

Die erfindungsgemäße Vorrichtung bezieht sich auf eine Durchflussmessanordnung 1 nach **Fig. 1,** die einen Ultraschallsensor 3 aufweist, der an einer Leitung 2, die von einem Fluid durchflossen ist, angeordnet ist. Die Anordnung des Sensors 3 erfolgt an einer Außenwandung der Leitung 2. Der Sensor 3 weist mehrere piezoelektrische Ultraschallwandler auf, die bspw. derart zueinander ausgerichtet sind, dass sie sowohl Ultraschallpulse aussenden als auch empfangen können. Dabei wird sowohl Reflexion als auch Transmission verwendet, d. h., dass rückgestreute Ultraschallpulse von Partikeln in dem Fluid in der Leitung 2 von dem gleichen Schallwandler oder von einem gegenüberliegenden Schallwandler empfangen werden.

Der Sensor 3 ist elektronisch über elektrische Verbindungen 6 mit einer Signalprozessoreinheit 7 und einer Datenverarbeitungseinheit 4 verbunden, die einen Speicher 5 umfasst. Dieser Speicher 5 kann als physikalischer oder virtueller Speicher ausgebildet sein und ist als Ringpuffer vorgesehen, wodurch eine gleitende Auswertung der erfassten Daten unterstützt wird. Mittels einer Ausgabeeinheit 8 (Monitor, Datenschnittstelle o. ä.) können die bestimmten Daten ausgegeben und angezeigt werden.

Die Datenverarbeitungseinheit 4 führt zusammen mit dem Sensor 3 das erfindungsgemäße Verfahren aus.

BEZUGSZEICHENLISTE

1 Durchflussmessanordnung
2 Liquiddurchflossene Leitung
3 Ultraschall-Sensor
4 Datenverarbeitungseinheit
5 Speichereinheit
6 Elektrische Verbindung
7 Signalprozessoreinheit
8 Ausgabeeinheit

**Patentansprüche**

1. Messverfahren zur Messung der Partikelgrößenverteilung $\gamma$ und Partikelkonzentration Cv in einer liquiddurchflossenen Leitung (2) mittels einer Durchflussmessanordnung (1), die zumindest einen Ultraschall-Sensor (3) aufweist, der mit einer Datenverarbeitungseinheit (4) und einer Speichereinheit (5) operativ gekoppelt ist, **umfassend die Schritte**

   - Anordnen der Durchflussmessanordnung (1) an einer vorbestimmten Stelle an der liquiddurchflossenen Leitung (2), dabei Anordnen des Ultraschall-Sensors (3) an der Leitung (2);

- mittels eines Ultraschall-Sensors (3) Abgeben eines Ultraschall-Pulsstoßes zu einer vorbestimmten Zeit t=0 mit einer vorbestimmten Frequenz $f_i$, wobei der Pulsstoß zumindest 10 Perioden umfasst;

- mit dem Ultraschall-Sensor (3) Erfassen eines Spannungssignals V zu einem ersten Zeitpunkt to, wobei die erfasste Spannung V mit einer Partikelgrößenverteilung $\gamma$ und einer Partikelkonzentration Cv des Fluids in der Leitung (2) an der vorbestimmten Stelle korreliert;

- Berechnen der Intensität I durch Bilden des Quadrats einer Spannungsamplitude;

- mittels der Datenverarbeitungseinheit (4) Zwischenspeichern der Intensitäts- und Zeitdaten in der Speichereinheit (5);

- wiederholtes Erfassen des Spannungssignals V zu unterschiedlichen Zeitpunkten $t_N$, die auf den ersten Zeitpunkt to folgen, dabei Zwischenspeichern der so ermittelten Intensitäts- und Zeitdaten in der Speichereinheit (5);

- nach einer vorbestimmten Anzahl Messungen in der Datenverarbeitungseinheit (4)

- aus der Gesamtzahl der gespeicherten Intensitätsdaten in der Speichereinheit (5) Bestimmen eines Intensitätsmittelwerts I, eines Intensitätsprofils $I_N$ aus dem zeitlichen Gesamtverlauf der Spannungsamplitude und einer Varianz $\sigma$,

-- aus dem Intensitätsmittelwert I und der Varianz $\sigma$ Bestimmen eines Intensitätsmoments $\tau$ und einer Intensitätsmomentsverteilung $\tau_N$ sowie aus dem Intensitätsprofil $I_N$ Bestimmen eines Dämpfungsparameters $\alpha$, eines Rückstreuparameters $\beta$ sowie eines Verhältnisses R aus Intensitätsmomentsverteilung $\tau_N$ und Intensitätsprofil $I_N$, und

-- aus dem Verhältnis R, dem Dämpfungsparameter $\alpha$ und dem Rückstreuparameter $\beta$ Bestimmen einer Partikelgrößenverteilung $\gamma$ und einer Partikelkonzentration Cv des Fluids mittels eines Optimierungsverfahrens.

2. Verfahren nach Anspruch 1, wobei der Ultraschall-Sensor (3) zumindest zwei Ultraschall-Wandler aufweist, umfassend den Schritt

zum Erfassen der Spannung V

mittels eines ersten Ultraschall-Schallwandlers des Ultraschall-Sensors (3) Aussenden eines Ultraschallpulsstoßes mit einer vorbestimmten Periodenanzahl in einem Bereich von 10 bis 50 Perioden, bevorzugt von 30 bis 40 Perioden einer vorbestimmten Frequenz $f_j$ zu dem ersten Zeitpunkt to, und mittels des ersten oder eines zweiten Ultraschall-Schallwandlers des Ultraschall-Sensors (3) Empfangen des von Partikeln im Fluid rückgestreuten Ultraschallpulsstoßes.

3. Verfahren nach Anspruch 2,

**wobei**

der empfangene Ultraschallpulsstoß als analoges Signal von dem Ultraschall-Schallwandler erfasst und das Signal in einer Signalprozessoreinheit (7) mittels eines Tiefpassfilters gefiltert und digitalisiert wird.

4. Verfahren nach zumindest einem der Ansprüche 1 bis 3,

**umfassend den Schritt**

zur Bestimmung des Partikelkonzentrationsparameters $\tau$ Bilden einer linearen Korrelation zwischen der Varianz $\sigma$ und dem Quadrat des Intensitätsmittelwerts I, wobei der Partikelkonzentrationsparameter $\tau$ linear in Bezug auf die Partikelkonzentration ist.

5. Verfahren nach zumindest einem der Ansprüche 1 bis 4,

**umfassend den Schritt**

Verwenden einer vorbestimmten Anzahl Arbeitsfrequenzen in einem Bereich von 1 bis 15, bevorzugt 7 Frequenzen, wobei die Arbeitsfrequenz in einem Bereich von 200 kHz bis 10 MHz, bevorzugt von 1 bis 8 MHz liegt.

6. Verfahren nach zumindest einem der Ansprüche 1 bis 5,

**umfassend den Schritt**

- Bestimmen der Fließgeschwindigkeit des Fluids in der Leitung (2) mittels Kreuzkorrelation zweier zeitlich aufeinanderfolgender erfasster Spannungssignale V, und/oder

- Erfassen der Spannungssignale V für die Partikelmessung mittels Durchfahren verschiedener Frequenzen, wobei von einer niedrigsten zu einer höchsten Frequenz schrittweise gemessen wird, und/oder

- zum Bestimmen der Intensität I, die mit einer Partikelkonzentration korreliert, Berechnen der Signalamplitude im Quadrat von zeitgleich erfassten Signalen.

7. Verfahren nach zumindest einem der Ansprüche 1 bis 6,

**umfassend den Schritt**

- gleitend Berechnen der Parameter Mittelwert I, Intensitätsprofil $I_N$ und Varianz $\sigma$, dabei bei erneuter Erfassung des Spannungssignals V und Speichern dieses neuen Datensatzes an einem Endplatz in der Speichereinheit (5) Löschen eines an einem Anfangsplatz gespeicherten, älteren Datensatzes, und/oder
- nach Bestimmen der Partikelgrößenverteilung $\gamma$ und der Partikelkonzentration $C_V$ Ausgeben der bestimmten Partikelgrößenverteilung $\gamma$ und der Partikelkonzentration Cv an eine Ausgabeeinheit (8).

**8.** Durchflussmessanordnung (1) mit zumindest einem Ultraschall-Sensor (3), einer Datenverarbeitungseinheit (4) und einer Speichereinheit (5),
**dadurch gekennzeichnet, dass**
die Durchflussmessanordnung (1) zur Durchführung des Messverfahrens nach zumindest einem der Ansprüche 1 bis 7 ausgebildet ist.

**9.** Durchflussmessanordnung (1) nach Anspruch 8,
**dadurch gekennzeichnet, dass**
die Speichereinheit (5) ein Ringpuffer oder eine FIFO-Liste ist, wobei für eine vorbestimmte Anzahl Frequenzen die gleiche Anzahl Puffer vorliegt.

**10.** Durchflussmessanordnung (1) nach Anspruch 8 oder 9,
**dadurch gekennzeichnet, dass**
der Ultraschall-Sensor (3)

- zumindest zwei Ultraschall-Schallwandler aufweist, und/oder
- eine Vielzahl an Ultraschall-Schallwandlern aufweist, die in einem Array angeordnet sind.

## Claims

**1.** A measuring method for measuring the particle size distribution $\gamma$ and particle concentration $C_v$ in a conduit through which liquid flows (2), by means of a flowmeter assembly (1), which has at least one ultrasonic sensor (3), which is operatively coupled to a data processing unit (4) and to a storage unit (5),
**comprising the steps of**

- arranging the flowmeter assembly (1) at a predetermined location at the conduit through which liquid flows (2), thereby arranging the ultrasonic sensor (3) at the conduit (2);
- using an ultrasonic sensor (3) to emit an ultrasonic pulse impact at a predetermined time t=0 with a predetermined frequency $f_i$, wherein the pulse impact comprises at least 10 periods;
- using the ultrasonic sensor (3) to capture a voltage signal V at a first point in time to, wherein the captured voltage V correlates with a particle size distribution $\gamma$ and a particle concentration $C_v$ of the fluid in the conduit (2) at the predetermined location;
- calculating the intensity I by forming the square of a voltage amplitude;
- using the data processing unit (4) to temporarily store the intensity and time data in the storage unit (5);
- repeated capturing of the voltage signal V at different points in time $t_N$, which follow the first point in time to, thereby temporarily storing the intensity and time data determined in this way in the storage unit (5);
- after a predetermined number of measurements in the data processing unit (4)
- determining an average intensity value I from the total amount of the stored intensity data in the storage unit (5), an intensity profile $I_N$ from the total temporal course of the voltage amplitude and of a variance $\sigma$,
- determining an intensity moment $\tau$ and an intensity moment distribution $\tau_N$ from the average intensity value I and the variance $\sigma$, as well as determining a damping parameter $\alpha$, a backscattering parameter $\beta$, as well as a ratio R of intensity moment distribution $\tau_N$ and intensity profile $I_N$ from the intensity profile $I_N$, and
- determining a particle size distribution $\gamma$ and a particle concentration $C_v$ of the fluid from the ratio R, the damping parameter $\alpha$, and the backscattering parameter $\beta$ by means of an optimisation method.

**2.** The method according to claim 1, wherein the ultrasonic sensor (3) has at least two ultrasonic transducers,
**comprising the step of**
for capturing the voltage V
emitting an ultrasonic pulse impact with a predetermined number of periods in a range of 10 to 50 periods, preferably of 30 to 40 periods, of a predetermined frequency $f_j$ at the first point in time to by means of a first ultrasonic sound transducer of the ultrasonic sensor (3), and receiving the ultrasonic pulse impact backscattered by particles in the fluid by means of the first or a second ultrasonic sound transducer of the ultrasonic sensor (3).

3. The method according to claim 2,
   **wherein**
   the received ultrasonic pulse impact is captured as analogue signal by the ultrasonic sound transducer and the signal is filtered and digitised in a signal processing unit (7) by means of a low pass filter.

4. The method according to at least any one of claims 1 to 3,
   **comprising the step of**
   forming a linear correlation between the variance $\sigma$ and the square of the average intensity value I in order to determine the particle concentration parameter $\tau$, wherein the particle concentration parameter $\tau$ is linear with respect to the particle concentration.

5. The method according to at least any one of claims 1 to 4,
   **comprising the step of**
   using a predetermined number of operating frequencies in a range of 1 to 15, preferably 7 frequencies, wherein the operating frequency lies in a range of 200 kHz to 10 MHz, preferably of 1 to 8 MHz.

6. The method according to at least any one of claims 1 to 5,
   **comprising the step of**

   - determining the flow rate of the fluid in the conduit (2) by means of cross-correlation of two chronologically successive captured voltage signals V, and/or
   - capturing the voltage signals V for the particle measurement by means of passing through various frequencies, wherein measuring is performed step by step from a lowest to a highest frequency, and/or
   - calculating the squared signal amplitude of signals captured simultaneously in order to determine the intensity I, which correlates with a particle concentration.

7. The method according to at least any one of claims 1 to 6,
   **comprising the step of**

   - calculating the parameters average value I, intensity profile $I_N$ and variance $\sigma$ on a sliding scale, thereby deleting an older data set stored at an initial point in response to a further capturing of the voltage signal V and storing this new data set at an end point in the storage unit (5), and/or
   - outputting the determined particle size distribution $\gamma$ and the particle concentration Cv to an output unit (8) after the determination of the particle size distribution $\gamma$ and of the particle concentration $C_v$.

8. A flowmeter assembly (1) comprising at least one ultrasonic sensor (3), a data processing unit (4), and a storage unit (5),
   **characterised in that**
   the flowmeter assembly (1) is formed to perform the measuring method according to at least any one of claims 1 to 7.

9. The flowmeter assembly (1) according to claim 8,
   **characterised in that**
   the storage unit (5) is a circular buffer or a FIFO list, wherein the same number of buffers is present for a predetermined number of frequencies.

10. The flowmeter assembly (1) according to claim 8 or 9,
    **characterised in that**
    the ultrasonic sensor (3)

    - has at least two ultrasonic sound transducers, and/or
    - has a plurality of ultrasonic sound transducers, which are arranged in an array.

**Revendications**

1. Procédé de mesure permettant de mesurer la répartition de tailles de particules $\gamma$ et la concentration de particules Cv dans un conduit (2) traversé par un liquide au moyen d'un dispositif de mesure de débit (1) qui présente au moins un capteur à ultrasons (3), lequel est relié opérationnellement avec une unité de traitement des données (4) et une unité de stockage (5),
**comprenant les étapes suivantes :**

- disposition du dispositif de mesure de débit (1) à un endroit prédéfini sur le conduit (2) traversé par un liquide ; de plus, disposition du capteur à ultrasons (3) sur le conduit (2);
- au moyen d'un capteur à ultrasons (3), émission d'une impulsion ultrasonore à un moment prédéfini t=0 avec une fréquence prédéfinie fr, l'impulsion comprenant au moins 10 périodes;
- avec le capteur à ultrasons (3), détection d'un signal de tension V à un premier moment to, la tension V détectée établissant une corrélation avec une répartition de tailles de particules $\gamma$ et une concentration de particules Cv du fluide dans le conduit (2) à l'endroit prédéfini;
- calcul de l'intensité I par la formation du carré d'une amplitude de tension;
- au moyen de l'unité de traitement des données (4), enregistrement temporaire des données d'intensité et de temps dans l'unité de stockage (5);
- détection répétée du signal de tension V à des moments différents $t_N$ qui suivent le premier moment $t_0$; de plus, enregistrement temporaire des données d'intensité et de temps ainsi établies dans l'unité de stockage (5);
- après un nombre prédéfini de mesures dans l'unité de traitement des données (4)
- à partir du nombre total de données d'intensité stockées dans l'unité de stockage (5) détermination d'une valeur moyenne d'intensité I, d'un profil d'intensité $I_N$ à partir de l'ensemble de la courbe chronologique de l'amplitude de tension et d'une variance 6,
- à partir de la valeur moyenne d'intensité I et de la variance $\sigma$, détermination d'un moment d'intensité T et d'une répartition du moment d'intensité $T_N$ et, à partir du profil d'intensité IN, détermination d'un paramètre d'amortissement a, d'un paramètre de rétrodiffusion $\beta$ ainsi que d'un rapport R à partir de la répartition du moment d'intensité $T_N$ et du profil d'intensité $I_N$ et,
- à partir du rapport R, du paramètre d'amortissement $\alpha$ et du paramètre de rétrodiffusion $\beta$, détermination d'une répartition de tailles de particules $\gamma$ et d'une concentration de particules Cv du fluide au moyen d'un procédé d'optimisation.

2. Procédé conformément à la revendication 1, le capteur à ultrasons (3) présentant au moins deux transducteurs à ultrasons,
**comprenant l'étape suivante :**

pour détecter la tension V
au moyen d'un premier transducteur à ultrasons du capteur à ultrasons (3), émission d'une impulsion ultrasonore avec un nombre de périodes prédéfini dans une plage de 10 à 50 périodes, préférablement de 30 à 40 périodes, d'une fréquence $f_j$ prédéfinie au premier moment $t_0$, et au moyen du premier ou d'un deuxième transducteur à ultrasons du capteur à ultrasons (3), réception de l'impulsion ultrasonore rétrodiffusée par des particules dans le fluide.

3. Procédé conformément à la revendication 2,
**dans lequel**
l'impulsion ultrasonore reçue comme signal analogique est détectée par le transducteur à ultrasons et le signal est filtré au moyen d'un filtre passe-bas et numérisé dans une unité processeur pour signaux (7).

4. Procédé conformément au moins à l'une des revendications 1 à 3,
**comprenant l'étape suivante :**

pour la détermination du paramètre de concentration de particules T, formation d'une corrélation linéaire entre la variance $\sigma$ et le carré de la valeur moyenne d'intensité I,
le paramètre de concentration de particules $\tau$ étant linéaire par rapport à la concentration de particules.

5. Procédé conformément au moins à l'une des revendications 1 à 4,
**comprenant l'étape suivante :**
utilisation d'un nombre prédéfini de fréquences de travail dans une plage de 1 à 15, préférablement de 7 fréquences, la fréquence de travail se situant dans une plage de 200 kHZ à 10 MHz, préférablement de 1 à 8 MHz.

6. Procédé conformément au moins à l'une des revendications 1 à 5,

**comprenant l'étape suivante :**

- détermination de la vitesse d'écoulement du fluide dans le conduit (2) au moyen d'une corrélation croisée de deux signaux de tension V détectés successivement dans le temps,
et/ou
- détection des signaux de tension V pour la mesure de particules par le passage de diverses fréquences, la mesure étant effectuée progressivement d'une fréquence minimale à une fréquence maximale, et/ou
- pour la détermination de l'intensité I qui établit une corrélation avec une concentration de particules, calcul de l'amplitude de signaux dans le carré de signaux détectés simultanément.

7. Procédé conformément au moins à l'une des revendications 1 à 6,
**comprenant l'étape suivante** :

- calcul mobile des paramètres valeur moyenne I, profil d'intensité $I_N$ et variance $\sigma$ ; de plus, nouvelle détection du signal de tension V et mémorisation de ce nouvel article de données à un endroit final dans l'unité de stockage (5), suppression d'un ancien article de données stocké à un endroit initial, et/ou
- après détermination de la répartition de tailles de particules $\gamma$ et de la concentration de particules Cv, émission de la répartition de tailles de particules $\gamma$ déterminée et de la concentration de particules Cv sur une unité de sortie (8).

8. Dispositif de mesure de débit (1) avec au moins un capteur à ultrasons (3), une unité de traitement des données (4) et une unité de stockage (5),
**caractérisé en ce que**
le dispositif de mesure de débit (1) est conçu pour la réalisation du procédé de mesure conformément au moins à l'une des revendications 1 à 7.

9. Dispositif de mesure de débit (1) conformément à la revendication 8,
**caractérisé en ce que**
l'unité de stockage (5) est un tampon circulaire ou une liste FIFO, le même nombre de tampons étant existant pour un nombre prédéfini de fréquences.

10. Dispositif de mesure de débit (1) conformément à la revendication 8 ou 9,
**caractérisé en ce que**
le capteur à ultrasons (3)

- présente au moins deux transducteurs à ultrasons, et/ou
- présente un grand nombre de transducteurs à ultrasons qui sont disposés dans une rangée.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9726590 B2
- US 9086350 B2
- EP 1642113 B1
- DE 19740549 A1
- WO 2010057480 A2

**In der Beschreibung aufgeführte Nicht-Patentliteratur**

- Monitoring mineral slurry flow using pulse-echo ultrasound. **STENER JAN F et al.** FLOW MEASUREMENT AND INSTRUMENTATION. BUTTERWORTH-HEINEMANN, 28. Juni 2016, vol. 50, 135-146